# EUROPÄISCHE PATENTSCHRIFT

(11) **EP 3 729 578 B1**
(45) Veröffentlichungstag und Bekanntmachung des Hinweises auf die Patenterteilung: **18.05.2022**
(21) Anmeldenummer: 18803399.7
(22) Anmeldetag: 12.11.2018
(51) Int. Cl.: H02G 3/30, C09J 7/30, C09J 7/21

(54) **MIT EINER EINDECKUNG UMMANTELTES LANGGESTRECKTES GUT**
ELONGATED GOODS ENCASED WITH A COVERING
UN MATÉRIAU ALLONGÉ ENVELOPPÉ AVEC UN REVÊTEMENT

(30) Priorität: 20.12.2017 DE 202017107748 U
(43) Veröffentlichungstag der Anmeldung: 28.10.2020
(73) Patentinhaber: Certoplast Technische Klebebänder GmbH, 42285 Wuppertal (DE)
(72) Erfinder: LEERMANN, Timo, 42369 Wuppertal (DE); RAMBUSCH, Peter, 42115 Wuppertal (DE)
(74) Vertreter: Andrejewski - Honke Patent- und Rechtsanwälte Partnerschaft mbB
(86) Internationale Anmeldenummer: PCT/EP2018/080973
(87) Internationale Veröffentlichungsnummer: WO 2019/120752

(56) Entgegenhaltungen:
- EP-A1- 2 298 845
- EP-A1- 2 497 805
- WO-A2-2013/024150
- DE-A1- 10 036 805
- DE-A1-102014 119 521
- US-A1- 2005 115 664

## Beschreibung

Die Erfindung betrifft ein mit einer Eindeckung ummanteltes langgestrecktes Gut, insbesondere zur Herstellung einer Längsumhüllung für Kabel in Automobilen, wobei die Eindeckung mit einem Träger, und mit drei auf einer Oberseite und/oder Unterseite des Trägers angeordneten Verschlussstreifen aus einer Klebemasse ausgerüstet ist und wobei die Verschlussstreifen entlang jeweiliger Längskanten des Trägers verlaufen und zwischen und/oder neben sich einen Freibereich definieren.

Eindeckungen zum Ummanteln von langgestrecktem Gut werden beispielsweise eingesetzt und realisiert, um insbesondere Kabel, Leitungen sowie gegebenenfalls Stecker in Automobilen zu umhüllen und vor beispielsweise Scheuerbeanspruchungen zu schützen. Tatsächlich können durch solche Eindeckungen und dadurch hergestellte Ummantelungen bzw. Längsummantelungen nicht nur elektrische Kabel, sondern auch allgemein Schläuche und Rohre bandagiert werden. Ebenso lassen sich unter Umständen Endgeräte mithilfe der Bandage schützen und zusammenhalten.

Im Stand der Technik werden bei der Herstellung solcher Ummantelungen bzw. Längsummantelungen ganz unterschiedliche Vorgehensweisen verfolgt. So wird beispielsweise bei der EP 1 875 573 B1 so vorgegangen, dass die Umhüllung aus zwei Klebebändern aufgebaut ist, wobei auf die Umhüllung ein drittes Klebeband aufgebracht wird. Als Folge hiervon ist die solchermaßen realisierte Eindeckung relativ kompliziert aufgebaut und auch die Herstellung gestaltet sich schwierig.

Bei einem Verfahren zum Ummanteln von langgestrecktem Gut entsprechend der DE 101 49 071 A1 ist eine Eindeckung mit einem selbstklebend ausgerüsteten Klebeband ausgerüstet. Das Klebeband ist so auf der Eindeckung verklebt, dass sich das Klebeband über eine der Längskanten der Eindeckungen hinaus erstreckt. Außerdem verfügt die textile Eindeckung und das Klebeband über im Wesentlichen rechtwinklig zur Laufrichtung angeordnete ein oder mehrere Schwächungslinien, so dass die Ummantelung leicht handeinreißbar ausgebildet ist.

Bei solchen Eindeckungen und daraus hergestellten Ummantelungen bzw. Längsummantelungen kommt es aus den zuvor geschilderten Gründen primär darauf an, einen Scheuerschutz zur Verfügung zu stellen. Aus diesem Grund werden an den Träger besondere Anforderungen hinsichtlich seiner Abriebfestigkeit gestellt. Dazu greift der Stand der Technik nach der DE 20 2012 103 975 U1 beispielsweise auf ein hoch abriebfestes technisches Klebeband zurück, welches mit einem bandförmigen doppellagigen Träger ausgerüstet ist. Der doppellagige Träger setzt sich aus zwei textilen Schichtlagen zusammen, die jeweils als Gewebe ausgebildet sind. Die beiden Gewebe sind durch eine Klebverbindungsschicht miteinander gekoppelt und definieren insgesamt ein Laminat. Dadurch wird insgesamt die Abriebbeständigkeit erhöht, allerdings ist auch in diesem Fall der Herstellungsaufwand beträchtlich.

Bei einer Eindeckung entsprechend der DE 20 2010 014 239 U1 geht es um ein Klebeband sowie eine daraus hergestellte Schlauchummantelung. Das Klebeband ist mit einem Träger und einem bzw. mehreren auf den Träger aufgebrachten Klebstoffstreifen ausgerüstet. Der Klebstoffstreifen bedeckt zwischen ca. 20 % und 50 % der Fläche der zugehörigen Trägerseite. Hierdurch wird zwar ein Klebeband zur Verfügung gestellt, welches eine besonders flexible Umwickelung von zusammenzufassenden Objekten und insbesondere Kabeln zur Verfügung stellt. Allerdings fehlen Angaben zur Abriebbeständigkeit bzw. sind an dieser Stelle noch Verbesserungen möglich.

Eine gattungsbildende Lehre ist durch die EP 2 497 805 A1 bekannt geworden. Hier geht es um ein Klebeband, welches insbesondere zum Ummanteln von langgestrecktem Gut wie Kabelsätzen in einem Automobil geeignet ist. Dazu ist ein Träger vorgesehen, der an seiner Längskante mit einem Klebstoffstreifen ausgerüstet ist. Es kann auch mit zwei Klebstoffstreifen an beiden Längskanten gearbeitet werden.

Eine Eindeckung wird generell auch im Rahmen der US 2005/0115664 A1 vorgestellt und beschrieben. Dabei kann ein randseitiger Klebstoffstreifen zur Fixierung an den betreffenden Kabelsträngen genutzt werden.

Im Rahmen der WO 2013/024150 A2 geht es um ein Verfahren zur Herstellung eines Klebebandes. Dabei werden mehrere Klebstoffstreifen auf einen Träger aufgebracht. Außerdem kann die beschichtete Trägerbahn im Bereich des Klebstoffstreifens bzw. mittig geschnitten werden.

Durch die DE 10 2014 119 521 A1 ist ein Klebeband mit Nähvliesträger bekannt geworden. Hier geht es insgesamt darum, die Abriebeigenschaften bei gleichzeitiger Verminderung des Flaggings zu verbessern.

Der Erfindung liegt das technische Problem zugrunde, ein mit einer Eindeckung ummanteltes langgestrecktes Gut der eingangs beschriebenen Ausprägung so weiterzuentwickeln, dass eine hohe Abriebfestigkeit mit zugleich geringen Herstellungskosten erreicht wird.

Zur Lösung dieser technischen Problemstellung ist ein mit einer Eindeckung ummanteltes langgestrecktes Gut nach Anspruch 1 vorgesehen.

Wie bereits erläutert, dient die erfindungsgemäße Eindeckung zum Ummanteln bzw. Längsummanteln von langgestrecktem Gut. Vorzugsweise wird hiermit eine Längsumhüllung für Kabel in Automobilen zur Verfügung gestellt. Um die an dieser Stelle beobachteten Scheuer- und Abriebbelastungen beispielsweise im Innern eines Motorraumes beherrschen zu können, greift die Erfindung einerseits auf einen einlagig ausgebildeten Träger zurück und andererseits einen solchen, der mit einer Abriebbeständigkeit der Klasse D nach LV 312-1 (2009) ausgerüstet ist.

Tatsächlich handelt es sich bei der zuvor angegebenen Norm LV 312-1 aus dem Jahr 2009 um eine Prüfvorschrift, mit deren Hilfe die Abriebbeständigkeit in Anlehnung an DIN ISO 622 bestimmt wird. Hierzu wird die zu untersuchende Eindeckung bzw. dessen bandförmiger Träger zunächst auf einen Dorn bzw. Metallstab mit 5 mm Durchmesser aufgeklebt. Mit einem Schabwerkzeug, welches einen Nadeldurchmesser von 0,45 mm aufweist, wird dann unter Berücksichtigung einer Gewichtskraft von 7 N die Anzahl der Hübe bestimmt, die erforderlich ist, um das Klebeband bzw. der Träger durchzuscheuern. Je größer die Anzahl der Hübe, desto abriebbeständiger ist das fragliche Klebeband ausgelegt.

Man unterscheidet in der Praxis zwischen der Abriebklasse A, die keinen Abriebschutz bietet, weil die Anzahl der Hübe weniger als 100 beträgt, bis zur Klasse E, die einen hohen Abriebschutz zur Verfügung stellt. Hierzu korrespondiert eine Anzahl an Hüben von 5.000 und mehr.

Erfindungsgemäß wird nun ein Träger gefordert, der zumindest der Abriebklasse D nach der zuvor beschriebenen Norm genügt, das heißt unter Berücksichtigung einer Anzahl von 1.000 bis 4.999 Hüben (noch) nicht durchscheuert. Sofern die Abriebklasse E erreicht wird, werden sogar 5.000 bis 14.999 Hübe ohne Durchscheuern aufgenommen. Zur Abriebklasse D korrespondiert ein "hoher Abriebschutz", während die Klasse E mit einem "sehr hohen Abriebschutz" ausgerüstet ist.

Diese hohe bzw. sehr hohe Abriebbeständigkeit wird erfindungsgemäß mit einem Träger erreicht und zur Verfügung gestellt, der ausdrücklich einlagig ausgebildet ist, also nicht wie der Stand der Technik nach der DE 20 2012 103 975 U1 aus zwei Schichtlagen aufgebaut ist. Tatsächlich kommen erfindungsgemäß als einlagiger Träger regelmäßig textile Träger zum Einsatz, die über ein Flächengewicht von 30 g/m² bis 300 g/m² verfügen. In der Regel bemisst sich das Flächengewicht zu wenigstens 100 g/m², um den geforderten Abriebschutz zur Verfügung zu stellen.

Bei dem textilen Träger handelt es sich darüber hinaus und vorteilhaft um ein Gewebe, ein Vlies oder ein Gewirke. Im Regelfall ist der einlagige Träger als einlagige textile Schicht aus einem Gewebe ausgebildet.

Um die geforderte Abriebbeständigkeit zu erreichen, ist der vorteilhaft eingesetzte textile Träger aus Polyesterfasern und/oder Polyamidfasern aufgebaut. Die Polyesterfasern bzw. Polyamidfasern oder allgemein geeignete Fasern des textilen Trägers werden in der Regel zur Herstellung von Fäden eingesetzt, die dann ihrerseits als insbesondere Kett- und Schussfäden Verwendung in dem vorteilhaft eingesetzten Gewebe als Träger finden.

Um in diesem Zusammenhang die Abriebbeständigkeit zu erhöhen, sind in der Regel die Fäden des textilen Trägers texturiert. Das Texturieren bezeichnet allgemein einen Vorgang, bei welchem die Fäden dauerhaft gekräuselt werden. Durch die Kräuselung werden Schlingen erzeugt, welche die elastische Dehnbarkeit und auch die Abriebbeständigkeit erhöhen.

Dabei können gängige Texturierverfahren wie beispielsweise das Falschdrahtverfahren eingesetzt werden. Auch eine Blastexturierung ist grundsätzlich möglich. Darüber hinaus können die Fäden des eingesetzten textilen Trägers auch intermingelt sein. Das Intermingeln bzw. auch Interlacing bezeichnet eine Zusatzausrüstung der Fäden, bei welcher diese durch eine Verwirbelung mit Luft punktuell verflochten werden.

Abgesehen von diesen Maßnahmen zur Erhöhung der Abriebbeständigkeit ist es alternativ und zusätzlich aber auch möglich, dass der Träger bzw. textile Träger chemisch und/oder physikalisch verfestigt wird. Die chemische Verfestigung erfolgt dabei typischerweise durch Einbringen eines Bindemittels. Eine physikalische Verfestigung ist beispielsweise derart möglich, dass bei einem eingesetzten Vlies das besagte Vlies zusätzlich vernadelt wird. Auch das Ein- oder Aufbringen von Nähfäden bei einem solchen Vlies mag hierunter fallen. Jedenfalls existieren im Stand der Technik vielfältige Methoden und Vorgehensweisen, um den beschriebenen Träger und insbesondere textilen Träger mit der geforderten Abriebbeständigkeit zumindest der Klasse D nach LV 312-1 auszurüsten, und zwar auch dann, wenn der Träger einlagig ausgebildet ist bzw. im vorliegenden Fall nur eine Gewebeschicht oder nur eine Vliesschicht als Träger eingesetzt wird.

Beispielsweise lassen sich Nähvliesträger mit einem Flächengewicht von 230 g/m² realisieren, welche im Detail so aufgebaut sind, wie dies in der DE 20 2014 106 246 U1 beschrieben wird und die die Abriebklasse D aufweisen. Genauso gut sind Gewebeträger der Abriebklasse D verfügbar, beispielsweise solche, wie sie in der DE 20 2016 102 701 U1 der Anmelderin erläutert werden. Jedenfalls stehen solche Träger grundsätzlich zur Verfügung und können erfindungsgemäß zur Realisierung der speziellen Eindeckung aufgegriffen und umgesetzt werden.

Der jeweilige Verschlussstreifen ist in der Regel aus einer Klebemasse auf Hotmelt-Basis ausgebildet. Alternativ oder zusätzlich kann aber auch eine visco-elastische Klebemasse für die Realisierung des Verschlussstreifens zum Einsatz kommen. Die Herstellung des jeweiligen Klebestreifens bzw. Verschlussstreifens beispielsweise auf Basis eines Hotmelt-Klebstoffes als Klebemasse gestaltet sich besonders einfach derart, dass die fragliche Klebemasse im Düsenauftragsverfahren auf den Träger aufgebracht wird. Dadurch können beide Klebestreifen vorteilhaft und besonders einfach auch mit einer übereinstimmenden Breite ausgerüstet werden.

Die Breite des Verschlussstreifens bzw. Klebestreifens bemisst sich in der Regel zu circa 10 % bis 30 % der Breite des Trägers. Außerdem ist der Verschlussstreifen meistens mit einem Streifenauftragsgewicht von 50 g/m² bis 150 g/m² ausgerüstet. Zusätzlich zu den beiden obligatorischen Verschlussstreifen auf der Oberseite/Unterseite des Trägers ist erfindungsgemäß noch der weitere dritte Klebestreifen vorgesehen. Dieser dritte Klebestreifen fungiert als Fixierstreifen. Außerdem ist der dritte Klebestreifen im Querschnitt des Trägers gesehen im Freibereich zwischen und/oder neben den beiden zuvor angesprochenen Verschlussstreifen bzw. Klebestreifen angeordnet. Hier hat es sich bei einer Variante darüber hinaus bewährt, wenn der dritte Klebestreifen spiegelsymmetrisch zu einer Zentralachse des Trägers angeordnet wird.

Zur Herstellung der Ummantelung wird die Eindeckung in Axialrichtung mit einem Verschlussstreifen am langgestreckten Gut fixiert. Der andere Verschlussstreifen lässt sich unter Bildung eines Verschlusses beispielsweise an der Außenseite des Trägers festlegen. Alternativ hierzu kann aber auch so vorgegangen werden, dass die Eindeckung in Axialrichtung zunächst mit dem dritten Klebestreifen bzw. Fixierstreifen am langgestreckten Gut festgelegt wird. Anschließend werden beide Verschlussstreifen unter Bildung eines Verschlusses sowie eines Umschlags gegeneinander verklebt.

Im Folgenden wird die Erfindung anhand einer lediglich ein Ausführungsbeispiel darstellenden Zeichnung näher erläutert: Es zeigen:
Fig. 1 eine nicht beanspruchte Eindeckung
Fig. 2 die Eindeckung im Rahmen einer erfindungsgemäßen Alternative
Fig. 3 eine weitere 2. erfindungsgemäße alternative Ausgestaltung der Eindeckung
Fig. 4 eine mithilfe der Eindeckung nach Fig. 1 realisierte Ummantelung von langgestrecktem Gut,
Fig. 5 eine Ummantelung des langgestreckten Gutes unter Rückgriff auf die Eindeckung nach Fig. 2 und
Fig. 6 eine Ummantelung mithilfe der in der Fig. 3 dargestellten Eindeckung.

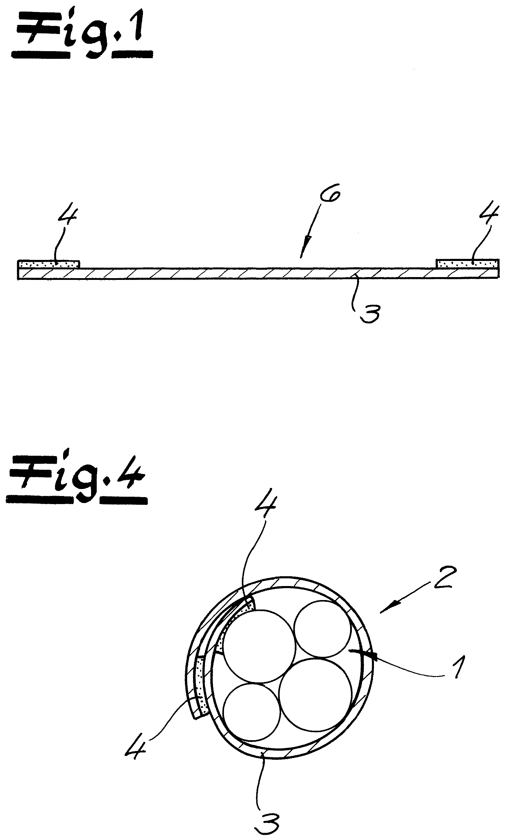

In den Figuren ist eine Eindeckung dargestellt, die zum Ummanteln von langgestrecktem Gut 1 eingesetzt wird. Bei dem langgestreckten Gut 1 handelt es sich nicht einschränkend um beispielsweise Kabel, Leitungen, Rohre oder auch Steckverbinder, Endgeräte etc., die regelmäßig im Innern eines Automobils verlaufen und mithilfe der Eindeckung zusammengefasst werden sollen. Außerdem sorgt die Eindeckung in diesem Zusammenhang typischerweise für einen Abriebschutz. Tatsächlich wird mithilfe der nachfolgend noch im Detail zu beschreibenden Eindeckung das langgestreckte Gut 1 in Längsrichtung bzw. Axialrichtung ummantelt, so dass auf diese Weise insgesamt eine Längsumhüllung 2 des langgestreckten Gutes 1 zur Verfügung gestellt wird, wie sie in den Fig. 4, 5 und 6 im Schnitt dargestellt ist.

Die Eindeckung als solche ist dagegen im Detail im Schnitt in den Fig. 1, 2 und 3 wiedergegeben. Tatsächlich setzt sich die Eindeckung im Wesentlichen aus einem Träger 3 und wenigstens zwei auf den Träger 3 aufgebrachten Verschlussstreifen bzw. Klebestreifen 4 zusammen. Die Verschlussstreifen bzw. Klebestreifen 4 sind aus einer Klebemasse hergestellt.

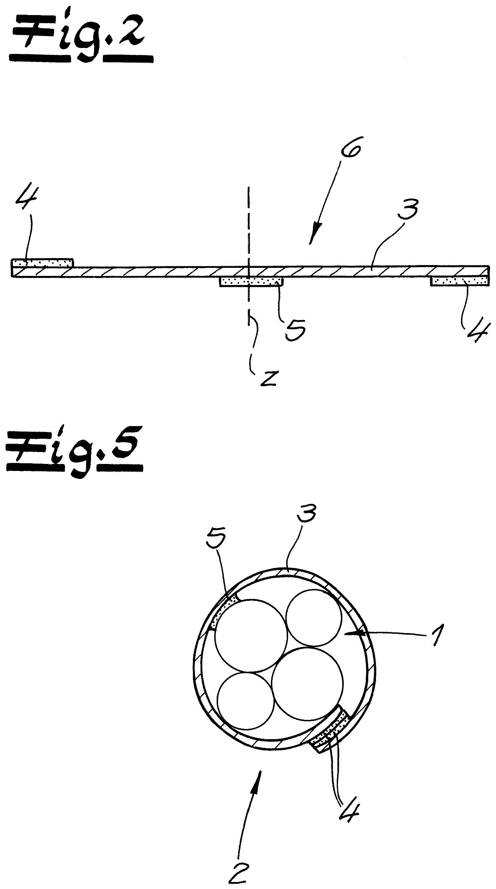

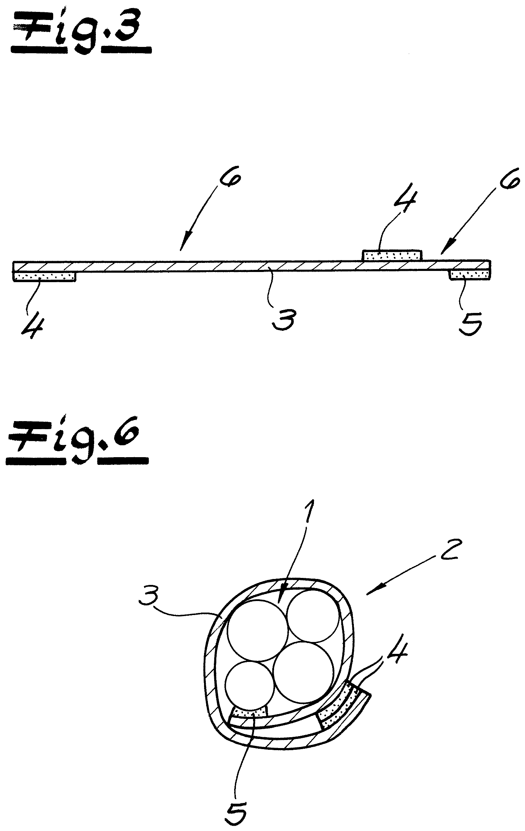

Die Verschlussstreifen 4 können gemeinsam auf einer Oberseite des Trägers 3 platziert werden, wie dies das Ausführungsbeispiel nach der Fig. 1 zeigt. Im Rahmen der Varianten nach den Fig. 2 und 3 sind die beiden Verschlussstreifen 4 auf einerseits der Oberseite und andererseits der Unterseite des Trägers 3 angeordnet. Bei dem Träger 3 handelt es sich um einen bandförmigen Träger 3, der in den Fig. 1 bis 3 ebenso wie die Verschlussstreifen 4 im Querschnitt dargestellt ist. Die beiden Verschlussstreifen 4 verlaufen dabei jeweils entlang jeweiliger Längskanten des Trägers 3 oder mit vorgegebenem Abstand und parallel hierzu. Bei den Ausführungsbeispielen nach den Fig. 1 und 2 schließen die Verschlussstreifen 4 jeweils seitenbündig an zugehörige Trägerkanten an. Das gilt auch für den linken Verschlussstreifen 4 bei der Variante nach der Fig. 3, wohingegen der rechte Verschlussstreifen 4 im Rahmen dieses Ausführungsbeispiels beabstandet zur Trägerkante und parallel hierzu verläuft. Außerdem definieren die beiden Verschlussstreifen 4 einen Freibereich 6 zwischen sich bei den Varianten 1 und 2. Das Ausführungsbeispiel nach der Fig. 3 verfügt sogar über zwei Freibereiche 6, einerseits zwischen den beiden Verschlussstreifen 4 und andererseits neben den beiden Verschlussstreifen 4.

Im Freibereich 6 zwischen den beiden Verschlussstreifen 4 ist im Rahmen der Variante nach der Fig. 2 ein dritter Klebestreifen 5 angeordnet, der vorliegend als Fixierstreifen 5 ausgebildet ist. Im Ausführungsbeispiel nach der Fig. 3 findet sich der fragliche Klebestreifen bzw. Fixierstreifen 5 neben den beiden Verschlussstreifen 4, vorliegend neben dem rechten Verschlussstreifen 4 im dortigen Freibereich 6. Hierauf wird nachfolgend noch näher eingegangen werden. Beide Verschlussstreifen 4 verlaufen jeweils nicht nur entlang der Längskanten des bandförmigen Trägers 3, sondern sind auch jeweils ohne Überhang auf den Träger 3 aufgebracht. Das heißt, die beiden Verschlussstreifen 4 sind bündig an dem jeweiligen Längsrand bzw. der Längskante des Trägers 3 angeordnet respektive verlaufen mit gleichbleibendem Abstand parallel hierzu. Das gilt im Rahmen des Ausführungsbeispiels, ist jedoch nicht zwingend. Auch der dritte Klebestreifen bzw. Fixierstreifen 5 ist ohne Überhang auf den Träger 3 aufgebracht.

Erfindungsgemäß ist der bandförmige und längserstreckte Träger 3 nun einlagig ausgebildet. Außerdem verfügt der Träger über eine Abriebbeständigkeit der Klasse D nach LV 312-1 (2009). Bei dem Träger 3 handelt es sich vorliegend um einen textilen Träger, der mit einem Flächengewicht im Bereich von 30 g/m² bis 300 g/m² ausgerüstet ist. Nach dem Ausführungsbeispiel ist der textile Träger 3 als Gewebe ausgebildet.

Tatsächlich kommt in diesem Zusammenhang ein Gewebe aus Polyesterfäden und/oder Polyamidfäden zum Einsatz. Die jeweiligen Polyesterfäden bzw. Polyamidfäden sind jeweils aus Polyesterfasern bzw. Polyamidfasern aufgebaut. Die fraglichen Fäden des Gewebes können zur Erhöhung der Abriebbeständigkeit der beschriebenen Eindeckung bzw. des bandförmigen Trägers 3 auch texturiert und/oder intermingelt sein, wie dies einleitend bereits beschrieben wurde.

Bei den Verschlussstreifen 4 bzw. den beiden Klebestreifen 4 und auch dem Fixierstreifen bzw. dritten Klebestreifen 5 handelt es sich jeweils um einen solchen, dessen Klebemasse unter Rückgriff auf einen Klebstoff auf Hotmelt-Basis hergestellt wird. Tatsächlich können übliche UV-aushärtbare Acrylatklebstoffe zum Einsatz kommen. Alternativ oder zusätzlich ist es auch möglich, auf eine visco-elastische Klebemasse zur Realisierung sowohl der beiden Klebestreifen 4 als auch des dritten Klebestreifens 5 zurückzugreifen.

Die Herstellung der Verschlussstreifen 4 und auch des Fixierstreifens 5 erfolgt in der Regel im Düsenverfahren durch Auftrag eines Schmelzklebstoffes. Als Folge hiervon verfügen die sämtlichen Klebestreifen 4, 5 typischerweise über eine übereinstimmende Breite. Die Breite des jeweiligen Klebestreifens 4, 5 kann dabei im Bereich von circa 10 % bis 30 % bezogen auf die Breite des Trägers betragen. Für den jeweiligen Klebestreifen 4, 5 empfiehlt die Erfindung ein Streifenauftragsgewicht von 50 g/m² bis 150 g/m².

Wie bereits erläutert, ist der dritte Klebestreifen bzw. Fixierstreifen 5 zwischen bzw. neben den beiden Verschlussstreifen 4 im Freibereich 6 angeordnet. Außerdem ist der dritte Klebestreifen bzw. Fixierstreifen 5 beim Ausführungsbeispiel nach der Fig. 2 spiegelsymmetrisch zu einer in der Fig. 2 gestrichelt angedeuteten Zentralachse Z des Trägers 3 angeordnet und orientiert.

Mithilfe der zuvor beschriebenen Eindeckung lässt sich insgesamt eine Längsumhüllung 2 realisieren, wie sie in den Fig. 4 bis 6 im Detail dargestellt ist. Zur Herstellung der Längsumhüllung nach der Fig. 4 wird auf die Eindeckung gemäß Fig. 1 zurückgegriffen. Dabei wird die Eindeckung der Fig. 1 zunächst einmal in Axialrichtung mit einem der beiden Verschlussstreifen 4 am langgestreckten Gut 1 fixiert. Anschließend wird der andere Verschlussstreifen 4 unter Bildung eines Umschlages im vorliegenden Fall an der Unterseite des Trägers 3 festgelegt. Denn die Eindeckung nach der Fig. 1 ist mit zwei Verschlussstreifen 4 auf der Oberseite des Trägers 3 ausgerüstet.

Alternativ zu der Längsumhüllung nach der Fig. 4 kann auch eine Längsumhüllung entsprechend der Darstellung in der Fig. 5 realisiert und umgesetzt werden. Dabei kommt eine Eindeckung zum Einsatz, wie sie in der Fig. 2 dargestellt ist. In diesem Fall wird die Eindeckung zunächst in Axialrichtung mit dem Fixierstreifen bzw. dritten Klebestreifen 5 am langgestreckten Gut 1 festgelegt. Anschließend wird der Träger 3 beidseitig umschlingend um das langgestreckte Gut 1 herumgelegt und sorgt für den erforderlichen Umschlag. Der Verschluss des Trägers 3 mithilfe der Verschlussstreifen 4 erfolgt der Gestalt, dass die beiden Verschlussstreifen 4 gegeneinander verklebt werden. Das ist selbstverständlich nicht zwingend und die beiden Verschlussstreifen 4 könnten auch nebeneinander und mit Abstand zueinander jeweils an der Unterseite bzw. Oberseite des Trägers 3 fixiert werden.

Vergleichbar wie bei der Längsumhüllung nach der Fig. 5 wird zur Herstellung der Längsumhüllung gemäß der Fig. 6 vorgegangen. In diesem Fall kommt jedoch die Eindeckung nach der Fig. 3 zum Einsatz. Hier wird vergleichbar die fragliche Eindeckung nach der Fig. 3 zunächst in Axialrichtung mit dem Fixierstreifen bzw. dritten Klebestreifen 5 am langgestrecktem Gut 1 festgelegt. Anschließend wird der Träger 3 beidseitig umschlingend um das langgestreckte Gut 1 herumgelegt und sorgt für den erforderlichen Umschlag, in dem der Verschluss des Trägers 3 mit Hilfe der Verschlussstreifen 4 erfolgt, die gegeneinander verklebt werden. Grundsätzlich können die beiden Verschlussstreifen 4 aber auch nebeneinander und mit Abstand zueinander jeweils an der Unterseite bzw. Oberseite des Trägers 3 fixiert werden. Auch in diesem Fall wird die fragliche Eindeckung zunächst in Axialrichtung mit dem Fixierstreifen bzw. dritten Klebestreifen 5 am langgestreckten Gut 1 festgelegt. Anschließend wird der Träger 3 beidseitig umschlingend um das langgestreckte Gut 1 herumgelegt und sorgt für den erforderlichen Umschlag, in dem der Verschluss des Trägers 3 mithilfe der Verschlussstreifen 4 erfolgt, die gegeneinander verklebt werden.

## Patentansprüche

1. Mit einer Eindeckung ummanteltes langgestrecktes Gut (1), insbesondere zur Herstellung einer Längsumhüllung (2) für Kabel in Automobilen, wobei
die Eindeckung mit einem Träger (3), und mit wenigstens zwei auf einer Oberseite und/oder Unterseite des Trägers (3) angeordneten Verschlussstreifen (4) aus einer Klebemasse ausgerüstet ist, wobei ferner
die Verschlussstreifen (4) entlang jeweiliger Längskanten des Trägers (3) verlaufen und zwischen und/oder neben sich einen Freibereich (6) definieren, wobei weiter
der Träger (3) einlagig ausgebildet ist und wenigstens eine Abriebbeständigkeit der Klasse D nach LV 312-1, 2009, aufweist, **dadurch gekennzeichnet, dass**
zusätzlich zu den beiden Verschlussstreifen (4) ein weiterer dritter Klebestreifen als Fixierstreifen (5) vorgesehen ist, wobei darüber hinaus
der Fixierstreifen (5) im Querschnitt im Freibereich (6) zwischen und/oder neben den beiden Verschlussstreifen (4) angeordnet ist, und wobei
die Eindeckung in Axialrichtung mit dem Fixierstreifen (5) am langgestreckten Gut (1) festgelegt und beide Verschlussstreifen (4) unter Bildung eines Verschlusses sowie eines Umschlages gegeneinander verklebt sind.

2. Gegenstand nach Anspruch 1, **dadurch gekennzeichnet, dass** der Träger (3) als textiler Träger mit einem Flächengewicht von 30 g/m² bis 300 g/m² ausgebildet ist.

3. Gegenstand nach Anspruch 2, **dadurch gekennzeichnet, dass** der textile Träger (3) als Gewebe, Vlies oder Gewirke ausgebildet ist.

4. Gegenstand nach Anspruch 2 oder 3, **dadurch gekennzeichnet, dass** der textile Träger (3) aus Polyesterfasern und/oder Polyamidfasern aufgebaut ist.

5. Gegenstand nach Anspruch 4, **dadurch gekennzeichnet, dass** aus den Polyesterfasern und/oder Polyamidfasern hergestellte Fäden texturiert sind.

6. Gegenstand nach Anspruch 5, **dadurch gekennzeichnet, dass** die Fäden intemingelt sind.

7. Gegenstand nach einem der Ansprüche 1 bis 6, **dadurch gekennzeichnet, dass** der Träger (3) chemisch und/oder physikalisch verfestigt ist.

8. Gegenstand nach einem der Ansprüche 1 bis 7, **dadurch gekennzeichnet, dass** die Klebemasse für den Verschlussstreifen (4) aus einem Hotmelt-Klebstoff und/oder einem visco-elastischen Klebstoff hergestellt ist.

9. Gegenstand nach einem der Ansprüche 1 bis 8, **dadurch gekennzeichnet, dass** die beiden Verschlussstreifen (4) eine übereinstimmende Breite aufweist.

10. Gegenstand nach einem der Ansprüche 1 bis 9, **dadurch gekennzeichnet, dass** die Breite des Verschlussstreifens (4) circa 10 % bis 30 % der Breite des Trägers (3) beträgt.

11. Gegenstand nach einem der Ansprüche 1 bis 10, **dadurch gekennzeichnet, dass** der Verschlussstreifen (4) ein Streifenauftragsgewicht vom 50 g/m² bis 150 g/m² aufweist.

## Claims

1. Elongated article (1) encased in a cladding material, in particular for producing a longitudinal covering (2) for cables in automobiles, wherein the cladding material is equipped with a carrier (3) and with at least two closing strips (4) made from an adhesive compound arranged on an upper side and/or lower side of the carrier (3),
wherein further
the closing strips (4) extend along respective longitudinal edges of the carrier (3) and define a free area (6) between and/or beside themselves,
wherein further
the carrier (3) is constructed in a single ply and has an abrasion resistance of at least class D according to LV 312-1, 2009,
**characterized in that**
besides the two closing strips (4), a further, third adhesive strip is provided as a fixing strip (5), wherein additionally
the fixing strip (5) is arranged cross-sectionally in the free area (6) between and/or beside the two closing strips (4)
and wherein
the cladding material is fixed in the axial direction on the elongated article (1) by the fixing strip (5), and the two closing strips (4) are stuck against each other, forming a closure and a wrapping.

2. Object according to Claim 1, **characterized in that** the carrier (3) is designed as a textile carrier with a grammage of 30 g/m² to 300 g/m².

3. Object according to Claim 2, **characterized in that** the textile carrier (3) is designed as a woven fabric, a non-woven fabric or a knitted fabric.

4. Object according to Claim 2 or 3, **characterized in that** the textile carrier (3) is constructed from polyester fibres and/or polyamide fibres.

5. Object according to Claim 4, **characterized in that** threads produced from the polyester fibres and/or polyamide fibres are textured.

6. Object according to Claim 5, **characterized in that** the threads are intermingled.

7. Object according to any one of Claims 1 to 6, **characterized in that** the carrier (3) is chemically and/or physically reinforced.

8. Object according to any one of Claims 1 to 7, **characterized in that** the adhesive compound for the closing strip (4) is produced from a hot-melt adhesive and/or a viscoelastic adhesive.

9. Object according to any one of Claims 1 to 8, **characterized in that** the two closing strips (4) have a matching width.

10. Object according to any one of Claims 1 to 9, **characterized in that** the width of the closing strip (4) is equal to approximately 10 % to 30 % of the width of the carrier (3).

11. Object according to any one of Claims 1 to 10, **characterized in that** the closing strip (4) has a strip application weight from 50 g/m² to 150 g/m².

## Revendications

1. Produit allongé (1) enveloppé avec une couverture, en particulier pour la fabrication d'un gainage longitudinal (2) pour câbles dans le secteur automobile, sachant que la couverture est équipée d'un support (3) et d'au moins deux bandes de fermeture (4) composées d'une masse adhésive, disposées sur une face supérieure et/ou face inférieure du support (3), sachant en outre que
les bandes de fermeture (4) passent le long des bords longitudinaux respectifs du support (3) et définissent une zone libre (6) entre et/ou à côté d'elles, sachant en plus que
le support (3) est constitué en une couche et comporte au moins une résistance à l'abrasion de catégorie D selon la LV 312 1, 2009, **caractérisé en ce qu'**une autre troisième bande adhésive est prévue en tant que bande de fixation (5) en plus des deux bandes de fermeture (4), sachant en plus encore que
la bande de fixation (5) est disposée dans la section dans la zone libre (6) entre et/ou près des deux bandes de fermeture (4), et sachant que
la couverture est fixée en direction axiale avec la bande de fixation (5) sur le produit allongé (1) et les deux bandes de fermeture (4) sont collées l'une contre l'autre en formant une fermeture ainsi qu'une enveloppe.

2. Objet selon la revendication 1, **caractérisé en ce que** le support textile (3) est constitué sous la forme d'un support textile avec un grammage de 30 g/m² à 300 g/m².

3. Objet selon la revendication 2, **caractérisé en ce que** le support textile (3) est constitué sous la forme de tissu, de produit non-tissé ou tricoté.

4. Objet selon la revendication 2 ou 3, **caractérisé en ce que** le support textile (3) est constitué de fibres de polyester et/ou de fibres de polyamide.

5. Objet selon la revendication 4, **caractérisé en ce que** les fils fabriqués à partir de fibres de polyester et/ou de fibres de polyamide, sont texturés.

6. Objet selon la revendication 5, **caractérisé en ce que** les fils sont entremêlés.

7. Objet selon l'une quelconque des revendications 1 à 6, **caractérisé en ce que** le support (3) est fixé chimiquement et/ou physiquement.

8. Objet selon l'une quelconque des revendications 1 à 7, **caractérisé en ce que** la masse adhésive pour la bande de fermeture (4) est fabriquée à partir d'un adhésif thermofusible et/ou d'un adhésif visco-élastique.

9. Objet selon l'une quelconque des revendications 1 à 8, **caractérisé en ce que** les deux bandes de fermeture (4) comporte une largeur concordante.

10. Objet selon l'une quelconque des revendications 1 à 9, **caractérisé en ce que** la largeur de la bande de fermeture (4) représente environ 10 % à 30 % de la largeur du support (3).

11. Objet selon l'une quelconque des revendications 1 à 10, **caractérisé en ce que** la bande de fermeture (4) comporte un grammage d'application de bande de 50 g/m² à 150 g/m².
